# DEMANDE DE BREVET EUROPEEN

(11) **EP 1 376 279 A1**
(43) Date de publication de la demande: **02.01.2004**
(21) Numéro de dépôt: 03101680.1
(22) Date de dépôt: 10.06.2003
(51) Int. Cl.: G05B 19/042

(54) **Système de communication de sécurité.**

(30) Priorité: 18.06.2002 FR 0207677
(71) Demandeur: Schneider Automation, 06560 Valbonne (FR)
(72) Inventeur: CALANDRE, Jean-Marc, 83440, CALLIAN (FR); GANIER, André, 92500, RUEIL-MALMAISON (FR)

(57) **Abrégé**

L'invention concerne un système de communication de sécurité dans une application d'automatisme (5), comprenant un bus de communication amont (19) sur lequel est connecté au moins un moniteur de sécurité amont (12) muni de plusieurs sorties (13) et un bus de communication aval (29) sur lequel sont connectés un module d'entrées de sécurité aval (25), capable de générer sur le bus de communication aval (29) un signal de sécurité aval, et un moniteur de sécurité aval (22) recevant ledit signal de sécurité et muni de plusieurs sorties (23). Des sorties (13) du moniteur de sécurité amont (12) sont électriquement raccordées à des entrées du module d'entrées de sécurité aval (25) dans le but de piloter au moins une sortie (23) du moniteur de sécurité aval (22) en fonction de l'état des sorties (13) du moniteur de sécurité amont (12).

## Description

La présente invention se rapporte àun système de communication de sécurité permettant de faire circuler des informations de sécurité sur plusieurs bus de communication, de type bus de terrain ou bus capteurs/actionneurs. Ce système de communication de sécurité est particulièrement adapté aux applications d'automatisme réparties, notamment dans le domaine des automatismes industriels, des automatismes du bâtiment et du contrôle/commande de réseaux de distribution électrique.

Les bus de communication de terrain sont actuellement fréquemment utilisés dans des applications d'automatisme réparties. Ces applications d'automatisme sont généralement pilotées et surveillées par un ou plusieurs équipements d'automatisme, tels que des automates programmables, auxquels sont connectés un ou plusieurs bus de communication de terrain, par exemple par l'intermédiaire d'un coupleur maître. Un automate programmable contrôlant une application d'automatisme ou une partie d'une application d'automatisme (appelée îlot d'automatisme) peut ainsi être connecté via le bus à des constituants d'automatisme qui sont avantageusement déportés le long du process ou de la machine àautomatiser de façon àréduire les distances de câblage et à optimiser les modules d'entrées/sorties dans l'automate programmable.

L'utilisation d'un ou plusieurs bus de communication de terrain pour communiquer entre équipements d'automatisme et constituants d'automatisme permet ainsi de simplifier considérablement la mise en oeuvre et le raccordement des constituants d'automatismes déportés. Parmi ces constituants d'automatisme, on trouve par exemple des capteurs, des actionneurs, des variateurs de vitesse, des modules d'automatisme, des constituants de dialogue homme-machine, tels que boutons, commutateurs, voyants, afficheurs, etc... La connexion de tels constituants d'automatismes àun bus de communication est alors soit faite de façon directe via une interface intégrée dans le constituant, soit réalisée au travers d'interfaces de communication banalisées.

Jusqu'à présent, les informations de sécurité issues des constituants de sécurité, tels que boutons d'arrêt d'urgence, barrières immatérielles de sécurité, détecteurs de contrôles d'accès, ..., étaient exclues du bus de communication car ces constituants de sécurité devaient être raccordés directement en câblage conventionnel dans le circuit puissance, entraînant des surcoûts importants pour la mise en oeuvre de l'application d'automatisme. Grâce désormais à la fiabilité accrue des échanges d'informations sur les bus de terrain, due notamment à l'utilisation de mécanismes de reconnaissance et de correction d'erreurs, la connexion de tels constituants de sécurité sur des bus de communication de terrain devient possible et constitue un apport important permettant de couvrir un nombre croissant d'applications d'automatisme orientées sécurité.

Il existe en effet des bus de communication de terrain sur lesquels on peut simultanément connecter des constituants de sécurité cohabitant avec des modules et constituants ordinaires. Ainsi, tous les constituants d'automatisme répartis dans un îlot d'automatisme peuvent se connecter via un bus de communication à un équipement d'automatisme maître. Dans ce type d'architecture, il existe alors au moins un constituant de sécurité particulier appelé moniteur de sécurité. Le moniteur de sécurité, qui est connecté au bus de terrain, comporte une unité de traitement propre lui permettant d'analyser la forme et le contenu des signaux circulant sur le bus. Le moniteur de sécurité pilote une ou plusieurs sorties dédiées permettant par exemple en cas de défaut de couper la puissance sur tout ou partie de la machine. Dès lors, pour assurer efficacement une fonction de sécurité, le moniteur de sécurité doit être capable de déclencher ses sorties dès qu'il détecte : soit une erreur dans les différents échanges d'informations circulant sur le bus, soit un ordre d'arrêt provenant d'un constituant de sécurité connecté au bus, soit une défaillance matérielle d'un constituant de sécurité connecté au bus.

Le bus de terrain AS-i (Actuator Sensor Interface) est un bus de terrain standardisé, développé par un consortium de constructeurs et répondant aux normes EN50295 et IEC62026-2, qui permet le raccordement de nombreux types de constituants d'automatisme, de type capteurs/actionneurs principalement binaires, à un coupleur maître situé, par exemple, dans un automate programmable. La fiabilité des transmissions de données sur le bus AS-i rendent possibles le raccordement de constituants d'automatisme ordinaires et de constituants de sécurité sur un même bus AS-i de manière à pouvoir réaliser des applications d'automatisme orientées sécurité jusqu'àun niveau 4 selon la norme lEC61508 àpartir d'un bus AS-i standard. Pour cela, il faut connecter sur le bus AS-i au moins un moniteur de sécurité tel que défini ci-dessus. Les sorties du ou des moniteurs de sécurité sont paramétrées par un utilisateur de façon àce que chaque moniteur de sécurité soit capable de gérer un ou plusieurs des constituants de sécurité connectés à ce même bus AS-i, sans intervention du coupleur maître de ce bus.

Cependant, les bus de terrain sont généralement limités en distance et en nombre maximum de constituants connectables. Ces limitations nécessitent d'utiliser parfois plusieurs bus de communication pour des applications d'automatisme complexes ou réparties sur des distances importantes. Dans ce genre d'application d'automatisme, on peut souhaiter conserver des fonctions de sécurité tout au long du process ou de la machine à automatiser. C'est le cas par exemple lorsque l'on veut qu'une action sur un bouton d'arrêt d'urgence, situé à une extrémité de la machine, arrête de façon sécuritaire un moteur situé à l'autre extrémité. Or, la sécurité des informations ne peut être garantie que si la chaîne complète de communication est sûre et fiable : à savoir depuis la prise d'informations sur le bouton d'arrêt d'urgence jusqu'àl'actionneur pilotant le moteur àarrêter.

En conséquence, si la distance est trop grande ou si le nombre de constituants est trop important, il s'avère alors indispensable de faire transiter les informations de sécurité à travers plusieurs bus de terrain, par l'intermédiaire de plusieurs coupleurs maîtres, voire àtravers plusieurs automates programmables reliés en réseau. De telles solutions pourraient alors nécessiter la mise en redondance de différents coupleurs maîtres ou automates programmables et/ou l'utilisation de matériels spécifiques, entraînant des complexités et des surcoûts pénalisants.

L'invention a donc pour but de remédier àces inconvénients en proposant un système de communication de sécurité permettant de faire transiter, de façon simple, facile à mettre en oeuvre et peu coûteuse, des informations de sécurité sur plusieurs bus de communication, de type bus de terrain ou bus capteurs/actionneurs, sans passer par les coupleurs maîtres de ces bus.

Pour cela, l'invention décrit un système de communication de sécurité dans une application d'automatisme comprenant un bus de communication amont sur lequel est connecté au moins un moniteur de sécurité amont muni de plusieurs sorties pilotées par le moniteur de sécurité amont et un bus de communication aval sur lequel sont connectés i) un module d'entrées de sécurité aval muni de plusieurs entrées et capable de générer sur le bus de communication aval un signal de sécurité aval représentatif de l'état desdites entrées, et ii) un moniteur de sécurité aval recevant ledit signal de sécurité et muni de plusieurs sorties qui sont pilotables par le moniteur de sécurité aval en fonction dudit signal de sécurité aval. Le système se caractérise par le fait que des sorties du moniteur de sécurité amont sont raccordées à des entrées du module d'entrées de sécurité aval dans le but de piloter au moins une sortie du moniteur de sécurité aval en fonction de l'état des sorties du moniteur de sécurité amont raccordées aux entrées du module d'entrées de sécurité aval.

Selon une caractéristique, deux sorties du moniteur de sécurité amont sont électriquement raccordées respectivement à deux entrées du module d'entrées de sécurité aval.

D'autres caractéristiques et avantages vont apparaître dans la description détaillée qui suit en se référant àdes modes de réalisation donnés àtitre d'exemple et représentés par les dessins annexés sur lesquels :
- la figure 1 décrit un premier exemple d'architecture d'un système de communication selon l'invention,
- la figure 2 représente un second exemple d'architecture d'un système de communication selon l'invention,
- les figures 3 et 4 montrent des variantes du premier exemple d'architecture.

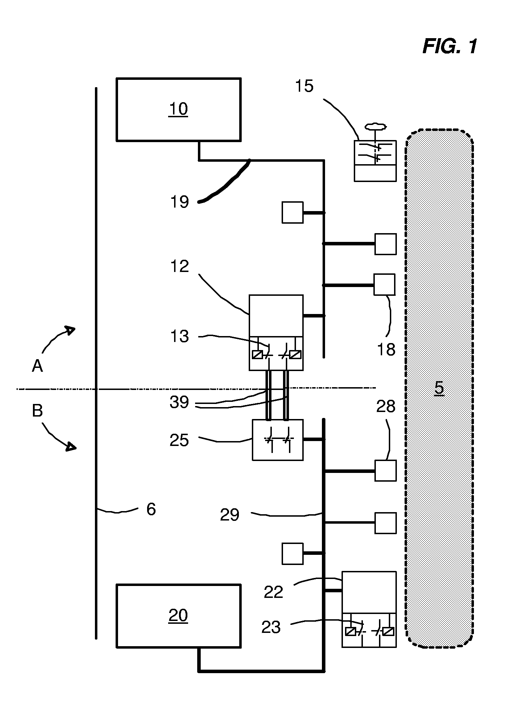

En référence àla figure 1, une application d'automatisme répartie 5 est pilotée par deux îlots d'automatisme A et B. Cette application d'automatisme 5 peut indifféremment appartenir au domaine des automatismes industriels, des automatismes du bâtiment, du contrôle/commande de réseaux de distribution électrique ou autres. Le premier îlot d'automatisme amont A comporte un automate programmable amont 10 et un bus de communication de terrain amont 19 connecté à l'automate programmable 10, par l'intermédiaire d'un coupleur maître, non représenté dans la figure 1. De même, le second îlot d'automatisme aval B comporte un automate programmable aval 20 et un bus de communication de terrain aval 29 connecté à l'automate programmable 20, par l'intermédiaire d'un coupleur maître, non représenté dans la figure 1. Chaque automate programmable 10,20 peut éventuellement comporter plusieurs coupleurs maîtres de façon à communiquer sur plusieurs bus de communication de terrain. Chaque automate programmable 10,20 peut par ailleurs être raccordé à un réseau de communication 6, de type réseau usine, utilisé notamment pour la communication entre îlots et pour la remontée d'informations vers un niveau central de supervision.

Un certain nombre de constituants d'automatisme 18, respectivement 28, sont implantés le long de l'application d'automatisme 5 à piloter et sont connectés à l'un des bus de communication 19, respectivement 29, en tant qu'esclaves ce qui leur permet d'échanger des informations avec les coupleurs maîtres des automates programmables 10, respectivement 20, en limitant ainsi les distances de câblage. Parmi ces constituants d'automatisme 18,28 on peut trouver indifféremment des capteurs, des actionneurs, des variateurs de vitesse, des modules d'automatisme, des constituants de dialogue homme-machine, etc... ainsi que des modules d'entrées de sécurité 15,25, tels que boutons d'arrêt d'urgence, barrières immatérielles de sécurité, détecteurs de contrôles d'accès, etc...

De façon connue, un module d'entrées de sécurité est capable de générer sur un bus de communication un signal de sécurité qui est représentatif de l'état de ses entrées. Pour être conforme aux normes de sécurité, un module d'entrées de sécurité doit comporter au moins deux entrées. Dans l'exemple d'un bus de communication de terrain AS-i, ce signal de sécurité est constitué d'une séquence ordonnée de plusieurs trames de quatre bits qui circulent de façon ordonnée et cyclique sur le bus. Le contenu de chaque séquence de trames est spécifique à un module d'entrées de sécurité déterminé, de sorte que tout récepteur d'un signal de sécurité est en mesure d'identifier la provenance de ce signal, après une période initiale d'apprentissage. Avantageusement, dans un bus AS-i, des signaux de sécurité peuvent ainsi cohabiter sur le même bus avec d'autres signaux émis par des constituants d'automatismes ordinaires.

Un moniteur de sécurité est un constituant d'automatisme qui comporte une unité de traitement apte à piloter des sorties de sécurité propres. L'unité de traitement est capable de recevoir des signaux de sécurité circulant sur le bus de communication et de les analyser pour détecter une anomalie dans la séquence des trames, afin de piloter ses sorties de sécurité en fonction de cette analyse. Pour être conforme aux normes de sécurité, un moniteur de sécurité doit piloter au moins deux sorties de sécurité. Par paramétrage, un utilisateur peut affecter à un moniteur de sécurité un ou plusieurs modules d'entrées de sécurité, localisés par exemple au moyen de leur adresse physique sur le bus. De plus, un moniteur de sécurité espionne tous les signaux échangés sur le bus de manière àêtre capable de détecter toute erreur dans le fonctionnement du bus de communication. Ainsi, un moniteur de sécurité doit être capable de commander le déclenchement de ses sorties de sécurité dès que :
- un ordre d'arrêt est détecté dans le signal de sécurité provenant d'un module d'entrées de sécurité affecté au moniteur de sécurité,
- une erreur est détectée (c'est-à-dire une interruption de séquence ou une séquence erronée) dans le signal de sécurité provenant d'un module d'entrées de sécurité affecté au moniteur de sécurité,
- une erreur est détectée dans les communications du bus.

Un moniteur de sécurité amont 12 est connecté au bus de communication amont 19 et possède au moins deux sorties de sécurité amont 13. Selon le mode de réalisation présenté en figure 1, les sorties de sécurité 13 sont deux sorties à relais à sécurité positive, qui sont intégrées dans le moniteur de sécurité amont 12. On pourrait également envisager des sorties de sécurité appartenant à un module de sorties de sécurité propre, connecté au bus de communication et dialoguant avec le moniteur de sécurité au moyen du bus. Le moniteur de sécurité amont 12 pilote ses sorties de sécurité 13 en fonction d'un paramétrage effectué initialement par l'utilisateur. Un module d'entrées de sécurité amont 15, qui est un bouton d'arrêt d'urgence dans l'exemple de la figure 1, est connecté au bus de communication amont 19. Ce module d'entrées de sécurité amont 15 envoie une séquence de trames déterminée tant que le bouton d'arrêt d'urgence n'est pas enfoncé.

Un moniteur de sécurité aval 22 est connecté au bus de communication aval 29 et possède au moins deux sorties de sécurité aval 23. Le système de communication comporte également un module d'entrées de sécurité aval 25 connecté au bus de communication aval 29. Le moniteur de sécurité aval 22 est paramétré pour surveiller notamment le module d'entrées de sécurité aval 25.

Le but de l'invention est de pouvoir transmettre une information de sécurité générée sur le bus de communication amont 19 vers le bus de communication aval 29. Pour cela, les sorties de sécurité amont 13 sont raccordées une à une aux entrées du module d'entrées de sécurité aval 25. Ainsi, tout changement d'état d'au moins une sortie de sécurité amont 13 va provoquer un changement d'état de l'entrée du module 25 qui lui est raccordée. La sécurité des informations est maintenue puisque, en utilisant deux sorties et deux entrées, on conserve toujours une redondance des informations. Selon le mode de réalisation de la figure 1, les sorties de sécurité amont 13 sont électriquement câblées par une liaison filaire 39 aux entrées du module d'entrées de sécurité aval 25.

Si le moniteur de sécurité amont 12 est, par exemple, paramétré pour surveiller le module d'entrées de sécurité amont 15, alors au moment d'un appui sur le bouton d'arrêt d'urgence, le module d'entrées de sécurité amont 15 transmet cette information sur le bus de communication amont 19 via une modification du signal de sécurité reçu par le moniteur de sécurité amont 12. Celui-ci déclenche alors au moins une de ses sorties de sécurité amont 13 ce qui provoque en conséquence le changement d'état des entrées du module d'entrées de sécurité aval 25 correspondant. Le module d'entrées de sécurité aval 25 transmet cette information sur le bus de communication aval 29 via une modification du signal de sécurité qui va être reçu par le moniteur de sécurité aval 22, lequel peut alors déclencher au moins une de ses sorties de sécurité aval 23.

Ainsi, une action sur un bouton d'arrêt d'urgence connecté àun premier bus de communication entraîne de manière sécuritaire le déclenchement automatique de sorties connectées sur un second bus de communication. On pourrait envisager de façon équivalente que le moniteur de sécurité amont 12 soit paramétré pour pouvoir surveiller de même tout autre constituant de sécurité connecté sur le bus de communication amont 19.

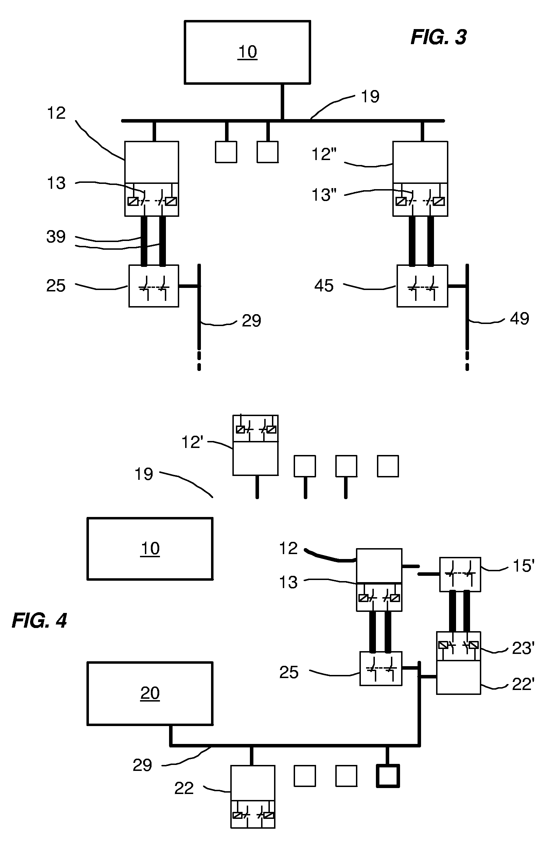

Dans la variante de la figure 3, où par exemple l'application d'automatisme 5 est gérée par plus que deux îlots d'automatisme, on souhaite faire transiter des informations de sécurité d'un bus de communication amont 19 vers plusieurs bus de communication aval 29,49. Pour cela, un second moniteur de sécurité amont 12" est connecté sur le bus de communication amont 19. Ce second moniteur 12" pilote des sorties 13" qui sont raccordées par liaison filaire àdes entrées d'un module d'entrées de sécurité 45 lequel est connecté sur le bus de communication 49. Il est évident que l'invention permettrait aussi de faire transiter une même information de sécurité sur plusieurs bus de communication chaînés en cascade. Pour cela, il suffirait de raccorder les sorties d'un moniteur de sécurité aval 23 sur des entrées d'un module d'entrées de sécurité connecté àun troisième bus de communication, et ainsi de suite.

Dans la variante de la figure 4, on souhaite faire passer des informations de sécurité de façon réciproque non seulement du bus de communication amont 19 vers le bus de communication aval 29 comme dans l'exemple de la figure 1, et mais aussi du bus de communication aval 29 vers le bus de communication amont 19. Pour cela, un second moniteur de sécurité aval 22' est connecté sur le bus de communication aval 29 et pilote des sorties 23'. Un module d'entrées de sécurité amont 15' comprenant plusieurs entrées est connecté au bus de communication amont 19 et est capable de générer sur le bus un signal de sécurité amont représentatif de l'état desdites entrées. Les sorties 23' du moniteur de sécurité aval 22' sont raccordées respectivement àdes entrées du module d'entrées de sécurité amont 15' dans le but de pouvoir piloter au moins une sortie 13' d'un moniteur de sécurité amont 12', connecté au bus de communication amont 19, en fonction de l'état des sorties 23' raccordées aux entrées du module d'entrées de sécurité amont 15'.

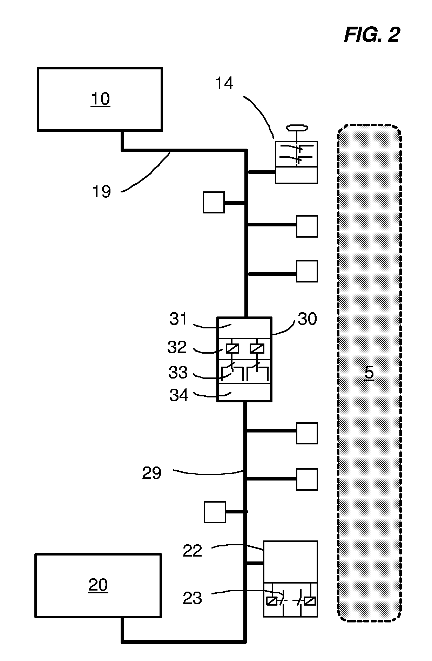

L'architecture présentée en figure 2 décrit un autre mode de réalisation du système de communication de sécurité reprenant les caractéristiques de l'architecture de la figure 1. Ce mode de réalisation comporte un répéteur de sécurité 30 possédant des connexions sur le bus de communication amont 19 et sur le bus de communication aval 29. Le répéteur de sécurité 30 intègre dans un même boîtier les fonctionnalités d'un moniteur de sécurité amont 12 avec ses sorties de sécurité 13 et d'un module d'entrées de sécurité aval 25. Il comporte un premier étage 31 qui réalise la fonction d'un moniteur de sécurité connecté au bus de communication amont 19 et qui pilote deux sorties internes 32. Celles-ci sont raccordées une à une àdes entrées 33 d'un deuxième étage 34 qui réalise la fonction d'un module d'entrées de sécurité connecté au bus de communication aval 29. Les sorties internes 32 sont indifféremment réalisées dans une technologie de sorties à relais, de sorties optoélectroniques, de sorties infrarouges, ou autres, de telle façon que le répéteur de sécurité 30 puisse assurer l'isolation galvanique entre les deux bus de communication de terrain 19 et 29. Ainsi, grâce àun tel répéteur de sécurité 30 conçu dans un seul boîtier et muni de deux ports de connexion, on simplifie avantageusement la réalisation d'un système de communication de sécurité selon l'invention, permettant de transmettre des informations de sécurité entre un premier et un second bus de communication de terrain, par exemple de type AS-i.

Il est bien entendu que l'on peut, sans sortir du cadre de l'invention, imaginer d'autres variantes et perfectionnements de détail et de même envisager l'emploi de moyens équivalents.

## Revendications

1. Système de communication de sécurité dans une application d'automatisme (5), comprenant :
- un bus de communication amont (19) sur lequel est connecté au moins un moniteur de sécurité amont (12) muni de plusieurs sorties (13) pilotées par le moniteur de sécurité amont (12),
- un bus de communication aval (29) sur lequel sont connectés un module d'entrées de sécurité aval (25) muni de plusieurs entrées et capable de générer sur le bus de communication aval (29) un signal de sécurité aval représentatif de l'état desdites entrées, et un moniteur de sécurité aval (22) recevant ledit signal de sécurité et muni de plusieurs sorties (23) qui sont pilotables par le moniteur de sécurité aval (22) en fonction dudit signal de sécurité aval,
**caractérisé par le fait que** des sorties (13) du moniteur de sécurité amont (12) sont raccordées àdes entrées du module d'entrées de sécurité aval (25) dans le but de piloter au moins une sortie (23) du moniteur de sécurité aval (22) en fonction de l'état des sorties (13) du moniteur de sécurité amont (12) raccordées aux entrées du module d'entrées de sécurité aval (25).

2. Système de communication de sécurité selon la revendication 1, **caractérisé par le fait que** deux sorties (13) du moniteur de sécurité amont (12) sont électriquement raccordées respectivement à deux entrées du module d'entrées de sécurité aval (25).

3. Système de communication de sécurité selon la revendication 1, **caractérisé par le fait que** le moniteur de sécurité amont (31) et le module d'entrées de sécurité aval (34) sont intégrés dans un répéteur de sécurité (30) comprenant un boîtier commun connecté au bus de communication amont (19) et au bus de communication aval (29).

4. Système de communication de sécurité selon la revendication 1, **caractérisé par le fait qu'**un module d'entrées de sécurité amont (15), connecté sur le bus de communication amont (19) et muni de plusieurs entrées, est capable de générer sur le bus de communication amont (19) un signal de sécurité amont représentatif de l'état desdites entrées, le signal de sécurité amont étant reçu par le moniteur de sécurité amont (12) dans le but de piloter les sorties (13) du moniteur de sécurité amont (12).

5. Système de communication de sécurité selon la revendication 1, comprenant :
- au moins un moniteur de sécurité aval (22') connecté au bus de communication aval (29) et muni de plusieurs sorties (23') pilotées par le moniteur de sécurité aval (22'),
- un module d'entrées de sécurité amont (15') connecté au bus de communication amont (19) et muni de plusieurs entrées et capable de générer sur le bus de communication amont (19) un signal de sécurité amont représentatif de l'état desdites entrées,
- un moniteur de sécurité amont (12') connecté au bus de communication amont (19), recevant ledit signal de sécurité et possédant plusieurs sorties (13') qui sont pilotables par le moniteur de sécurité amont (12') en fonction dudit signal de sécurité amont,
**caractérisé par le fait que** des sorties (23') du moniteur de sécurité aval (22') sont raccordées respectivement àdes entrées du module d'entrées de sécurité amont (15') dans le but de piloter au moins une sortie (13') du moniteur de sécurité amont (12') en fonction de l'état des sorties (23') du moniteur de sécurité aval (22') raccordées aux entrées du module d'entrées de sécurité amont (15').

6. Système de communication de sécurité selon la revendication 1, comprenant plusieurs moniteurs de sécurité amont (12,12") connectés au bus de communication amont (19) et comprenant plusieurs bus de communication aval (29,49) sur chacun desquels sont connectés un module d'entrées de sécurité aval (25,45) et un moniteur de sécurité aval, **caractérisé par le fait que** des sorties (13,13") de chaque moniteur amont (12,12") sont raccordées respectivement àdes entrées du module d'entrées aval (25,45) de chaque bus de communication aval (29,49) dans le but de piloter au moins une sortie de chaque moniteur aval en fonction de l'état des sorties (13,13") des moniteurs amont.

7. Système de communication de sécurité selon l'une des revendications précédentes, **caractérisé par** le fait les signaux de sécurité générés par les modules d'entrées de sécurité aval et amont sont composés d'une séquence ordonnée de plusieurs trames, spécifique àchaque module d'entrées de sécurité.

8. Système de communication de sécurité selon l'une des revendications précédentes, **caractérisé par le fait que** le bus de communication amont (19) et le(s) bus de communication aval (29,49) sont des bus AS-i.
